# EUROPEAN PATENT SPECIFICATION

(11) **EP 3 087 272 B1**
(45) Date of publication and mention of the grant of the patent: **24.04.2019**
(21) Application number: 14866794.2
(22) Date of filing: 29.12.2014
(51) Int. Cl.: F03B 17/02, F03G 3/00, F04B 9/111, F03C 1/03

(54) **NON FUEL, LIQUID THRUST ENGINE**
HYDROKRAFTMASCHINE OHNE BRENNSTOFFE
MOTEUR DE POUSSÉE À LIQUIDE SANS COMBUSTIBLE

(30) Priority: 29.12.2013 LK 1752213
(43) Date of publication of application: 02.11.2016
(73) Proprietor: Mallawa, Rupasinghe, Kegalle (LK)
(72) Inventor: Mallawa, Rupasinghe, Kegalle (LK)
(74) Representative: Evens, Paul Jonathan
(86) International application number: PCT/IB2014/067372
(87) International publication number: WO 2015/110884

(56) References cited:
- WO-A2-2005/012724
- CN-U- 202 707 356
- GB-A- 292 220
- GB-A- 2 334 763

## Description

### Field of the invention

The present invention relates to a thrust engine to generate power more particularly a thrust engine with thrust directional control valves and thrust control valves which generates power using thrust created on pistons using liquids stored overhead tank.

### Description about the prior art

The energy crisis is the most widely spoken headline in the world. Consumable energy sources will last for few decades and therefore the world scientists are experimenting renewable energy sources as a solution to the above crisis. Solar energy is one of the common usages in the modern world as an alternative to the power said power crisis. The solution is not much famous as it need huge investments in addition to the technical barriers such as direct sunlight etc... However industrialized counties have developed more alternatives such as nuclear power which leads to further issues in the globe. The commonly utilized green energy generation method in our country is hydropower generation, which needs billions of dollars investment at the present day.

CN 202 707 356 relates to a tap water pressure engine, and discloses a non fuel, fluid thrust engine according to the pre-amble of appended independent claim 1.

### Statement of Invention

In accordance with the present invention, there is provided a non fuel, fluid thrust engine as defined in appended independent claim 1. Embodiments of the invention are defined in the appended claim dependent on claim 1.

### Detail description about drawings

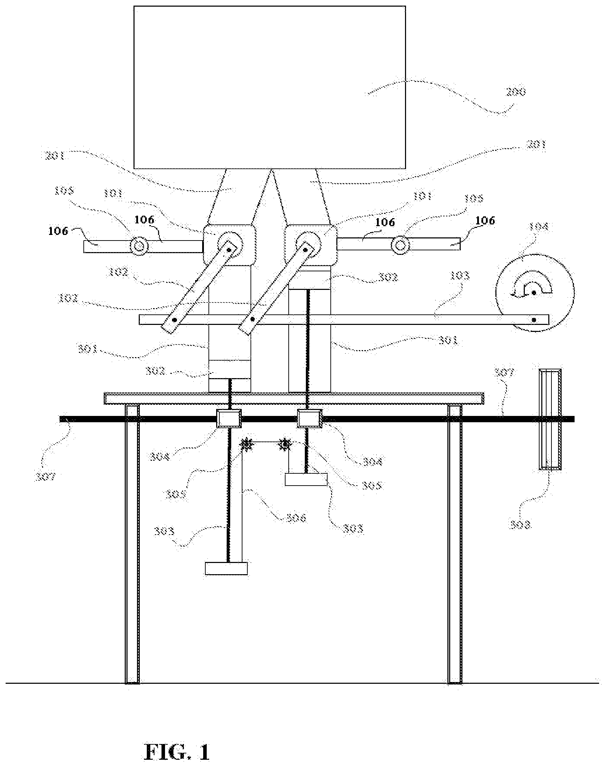

FIG 1 shows the whole system of this power generation mechanism, which is a thrust engine.
FIG 2 shows the thrust on the thrust directional control valve and further elaborated that the top and bottom openings are unlocked, while side open is locked.
FIG 3 shows the piston at its releasing stroke when the side and bottom openings are unlocked while top opening is locked.

### Detailed description about the invention

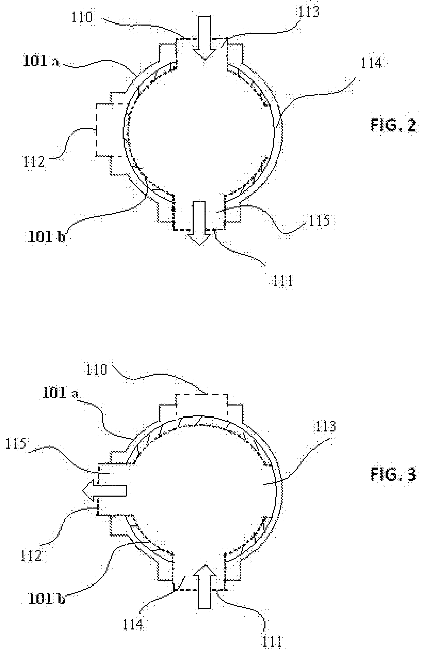

The non fuel thrust engine designed to generate power using thrust generated on to a cylinder with piston where the continuous power generation to be utilized using at least two cylinders with pistons and racks. The engine having an overhead tank (200) to store water or any suitable liquid and at least two downwards tubes (201) to make thrust on pistons (302) of the cylinders (301) via thrust directional control valves (101). The thrust control valve has an outer body (101 a) with openings at top (110), bottom (111) and a side (112). The inner part/ body (101 b) having same numbers of openings which is movable over the outer body to create different inlet and outlet in the process of working under thrust created by the liquid in said tubes. FIG 2 shows the unlocked position of the top opening of the said thrust directional control valve where the thrust directly applies on the piston of a cylinder by unlocking the bottom opening. When the back stroke is being created the top opening will be locked while unlocking the side opening using inner body of the valve. This has been illustrated at FIG 3. A thrust control valve will be at the position of FIG 2, while the other valve at the position shown in FIG 3, when the engine generates power.

Piston racks are connected to each other to ensure the reciprocating movements of the pistons, which can be achieved using sprocket chain and sprockets or hydraulic system. The valve arms (102) employed in to two adjacent valves ensuring unlock the thrust on one cylinder while the other is opens the side valves to output liquid in the relevant cylinder with closing thrust on it. An electromechanical arrangement is employed to sense the most bottom position of the pistons to change the direction of the valve. The rotor (104) senses the signal and works accordingly to unlock a top opening of a valve, while locking a top opening of the other vice versa.

In the process of movements of the pistons, a unidirectional spur gear (304) coupled to the piston racks (303) transfer power to the main shaft (307) to rotate a generator/turbine. A gear system will be utilized to generate desired output. The speed of the main shaft is controlled by the thrust control valves (105) employed at the outlets of the thrust directional control valves.

## Claims

1. A non-fuel, fluid thrust engine comprising: at least two cylinders (301), each having a piston (302) and a sprocket rack (303) connected to the piston; and thrust directional control valves (101), each having a reciprocating arm (102); **characterized in that** the reciprocating arms are actuated by a rotor (104) and **characterized by** the engine further comprising: an overhead container (200) for storing a non-fuel fluid, said overhead container being arranged above the at least two cylinders (301), at least two downward tubes (201) at a very bottom surface of the overhead container (200), the thrust directional control valves (101) being located between the downward tubes (201) and the cylinders (301); each thrust directional control valve (101) having a top opening (110), a bottom opening (111) and a side opening (112); each side opening of the thrust directional control valves (101) being connected to a thrust control valve (105); each top opening of the thrust directional control valves (101) being connected to one of the at least two downward tubes (201); each bottom opening of the thrust directional control valves (101) being connected to one of the at least two cylinders (301); unidirectional spur gears (304) coupled to the sprocket racks (303) to transfer power to a shaft (307) of a generator or of a turbine; a reciprocating chain (306) with sprockets (305) coupled to said sprocket racks (303) to ensure reciprocating movements of the pistons (302); and an electromechanical system configured to control the rotor after sensing the position of the pistons (302), such that the rotor at least opens the top opening of a thrust directional control valve, while closing the top opening of another thrust directional control valve.

2. A non-fuel, fluid thrust engine according to claim 1, in which each of the thrust directional control valves (101) comprises: an outer body (101a) which comprises the top opening (110), the bottom opening (111) and the side opening (112); and an inner movable part (101b) comprising three openings (113, 114,115), said inner movable part (101b) being rotatable within the outer body (11a) by means of the reciprocating arm to create a valve inlet and a valve outlet at a given time.

## Patentansprüche

1. Schubmotor für Nicht-Brennstoff-Fluid, umfassend: mindestens zwei Zylinder (301), die jeweils einen Kolben (302) und eine mit dem Kolben verbundene Zahnstange (303) aufweisen; und Schubrichtungsregelventile (101), die jeweils einen reziprokierenden Arm (102) aufweisen; **dadurch gekennzeichnet, dass** die reziprokierenden Arme durch einen Rotor (104) betätigt werden, und wobei der Motor ferner folgendes umfasst: einen Überkopfbehälter (200) zum Speichern eines Nicht-Brennstoff-Fluids, wobei der Überkopfbehälter oberhalb den mindestens zwei Zylindern (301) angeordnet ist, mit mindestens zwei Abwärtsrohrleitungen (201) an einer untersten Oberfläche des Überkopfbehälters (200), wobei sich die Schubrichtungsregelventile (101) zwischen den Abwärtsrohrleitungen (201) und den Zylindern (301) befinden; wobei jedes Schubrichtungsregelventil (101) eine obere Öffnung (110), eine untere Öffnung (111) und eine seitliche Öffnung (112) aufweist; wobei jede seitliche Öffnung der Schubrichtungsregelventile (101) mit einem Schubregelventil (105) verbunden ist; wobei jede obere Öffnung der Schubrichtungsregelventile (101) mit einer der mindestens zwei Abwärtsrohrleitungen (201) verbunden ist; wobei jede untere Öffnung der Schubrichtungsregelventile (101) mit einem der mindestens zwei Zylinder (301) verbunden ist; mit unidirektionalen Stirnrädern (304), die mit den Zahnstangen (303) gekoppelt sind, um Energie auf eine Welle (307) eines Generators oder einer Turbine zu übertragen; mit einer reziprokierenden Kette (306) mit Zähnen (305), die mit den Zahnstangen (303) gekoppelt sind, um reziprokierende Bewegungen der Kolben (302) zu gewährleisten; und mit einem elektromechanischen System, das so gestaltet ist, dass es den Rotor steuert, nachdem die Position der Kolben (302) erfasst worden ist, so dass der Rotor wenigstens die obere Öffnung eines Schubrichtungsregelventils öffnet, während er die obere Öffnung eines anderen Schubrichtungsregelventil schließt.

2. Schubmotor für Nicht-Brennstoff-Fluid nach Anspruch 1, wobei jedes der Schubrichtungsregelventile (101) folgendes umfasst: einen äußeren Körper (101a), der die obere Öffnung (110), die untere Öffnung (111) und die seitliche Öffnung (112) umfasst; und einen inneren, beweglichen Teil (101b), der drei Öffnungen (113, 114, 115) umfasst, wobei der innere bewegliche Teil (101b) in dem äußeren Körper (11a) durch den reziprokierenden Arm drehbar ist, um zu einem bestimmten Zeitpunkt einen Ventileinlass und einen Ventilauslass zu erzeugen.

## Revendications

1. Moteur de poussée à fluide non combustible, comprenant : au moins deux cylindres (301), chacun ayant un piston (302) et une crémaillère (303) reliée au piston ; et des soupapes de commande directionnelle de poussée (101), chacune ayant un bras à mouvement alternatif (102) ; **caractérisé en ce que** les bras à mouvement alternatif sont actionnés par un rotor (104) et **caractérisé par** le moteur comprenant en outre : un contenant surélevé (200) pour stocker un fluide non combustible, ledit contenant surélevé étant disposé au-dessus des au moins deux cylindres (301), au moins deux tubes descendants (201) sur une surface très inférieure du contenant surélevé (200), les soupapes de commande directionnelle de poussée (101) étant situées entre les tubes descendants (201) et les cylindres (301) ; chaque soupape de commande directionnelle de poussée (101) ayant une ouverture supérieure (110), une ouverture inférieure (111) et une ouverture latérale (112) ; chaque ouverture latérale des soupapes de commande directionnelle de poussée (101) étant reliée à une soupape de commande de poussée (105) ; chaque ouverture supérieure des soupapes de commande directionnelle de poussée (101) étant reliée à un des au moins deux tubes descendants (201) ; chaque ouverture inférieure des soupapes de commande directionnelle de poussée (101) étant reliée à l'un des au moins deux cylindres (301) ; des engrenages cylindriques unidirectionnels (304) accouplés aux crémaillères (303) pour transférer la puissance à un arbre (307) d'un générateur ou d'une turbine ; une chaîne à mouvement alternatif (306) avec des pignons (305) accouplés auxdites crémaillères (303) pour assurer les mouvements alternatifs des pistons (302) ; et un système électromécanique conçu pour commander le rotor après avoir détecté la position des pistons (302), de sorte que le rotor ouvre au moins l'ouverture supérieure d'une soupape de commande directionnelle de poussée, tout en fermant l'ouverture supérieure d'une autre soupape de commande directionnelle de poussée.

2. Moteur de poussée à fluide non combustible selon la revendication 1, chacune des soupapes de commande directionnelle de poussée (101) comprenant : un corps extérieur (101a) qui comprend l'ouverture supérieure (110), l'ouverture inférieure (111) et l'ouverture latérale (112) ; et une partie mobile intérieure (101b) comprenant trois ouvertures (113, 114, 115), ladite partie mobile intérieure (101b) étant rotative dans le corps extérieur (11a) au moyen du bras à mouvement alternatif pour créer une entrée de vanne et une sortie de vanne à un moment donné.
